# EUROPEAN PATENT SPECIFICATION

(11) **EP 2 489 261 B1**
(45) Date of publication and mention of the grant of the patent: **16.05.2018**
(21) Application number: 10790579.6
(22) Date of filing: 13.10.2010
(51) Int. Cl.: A01M 1/02, A01M 1/10

(54) **TRAPPING DEVICE FOR FRUIT-FEEDING INSECTS**
FALLE FÜR OBSTFLIEGEN
DISPOSITIF DE PIÉGEAGE POUR INSECTES FRUGIVORES

(30) Priority: 16.10.2009 ES 200930539 U
(43) Date of publication of application: 22.08.2012
(73) Proprietor: Sociedad Española de Desarrollos Quimicos S.L., 08013 Barcelona (ES)
(72) Inventor: PALENCIA ADRUBAU, Jaume, 08911 Badalona (ES)
(74) Representative: Curell Suñol S.L.P.
(86) International application number: PCT/ES2010/070660
(87) International publication number: WO 2011/045461

(56) References cited:
- WO-A1-2007/068329
- CN-Y- 2 529 517
- GR-A- 98 100 442
- US-A- 4 977 701

## Description

### Field of the invention

The invention relates to a trapping device for frugivorous insects according to the preamble of claim 1.

### State of the art

Frugivorous insects and particularly flying frugivorous insects cause substantial losses in agriculture, specially when they become a plague. That is why it has always been tried to fight against their negative effects on agricultural farms by using insecticides. In this context, the massive application of insecticides of chemical synthesis, used previously, has been loosing popularity in favour of more sophisticated and environmentally-friendly plague control techniques such as, for example, massive trapping.

Massive trapping consists in providing a plurality of trapping devices or traps distributed more or less uniformly over the agricultural farm. These traps are made up of a lid and a base that define an inner chamber. Normally, the base is provided with insect entrance openings into the inner chamber of the trap. Inside the container, for example, one or several attraction diffusers of the sexual or food-based type and an insecticide diffuser are arranged. The aim of the attraction diffusers is to attract the insects inside the trap, while the insecticide diffuser creates a toxic atmosphere in the inner chamber, which causes the death of the insects that enter it.

In practice, the commonly used insecticide diffusers are pieces of plastic impregnated with insecticide, such as for example, DICHLORVOS (2,2-dichlorovinyl dimethyl phosphate). In some cases this plastic material is placed inside a container made of insecticide-permeable material. However, this technique suffers from some drawbacks.

A first problem in the current technique is that the insecticide diffusers must be handled manually when they are prepared and arranged in the traps on the farm. Obviously, the insecticides used for massive trapping are particularly toxic in order to obtain satisfactory results against the plagues. The high toxicity of the insecticide diffusers, and specially those that are not inside an insecticide-permeable container, means that when they are handled by hand, during the said trap preparation and positioning processes, they can cause intoxication problems for the worker.

An additional problem lies in the fact that DICHLORVOS, which was also the insecticide used traditionally in these massive trapping devices, is no longer authorised by the governments in several countries. This leads to the need to find an alternative for these countries which, while being economically feasible, is just as or more efficient than the solutions known in the state-of-the-art.

Document US 4 977 701 A discloses the use of a poisoned substance to kill flying insects and to the isolation of this substance from the surrounding environment. It deals specifically with the use of a device that will attract the insects into an enclosed are that has been coated with a toxin capable of destroying them, and when dead, will allow for the collection of the insects in a sanitary manner. Additionally, the use of this device will enhance the efficacy of a given insecticide by providing the basis for the collection and formation of natural pheromone secreted by the insects.

Document GR 98 100 442 A discloses a trap for insects which eliminates harmful insects and prevents disturbances and possible infections. This trap consists of the combination of a) an opaque base where water and other substances for attracting insects are added which bears a conical inlet at its lower part which permits the entrance but not the exit of the insects; b) a transparent cover which bears an opening at its upper part positioned non-symmetrically with the lower opening and equipped with a special conical lattice which also permits the entrance but not the exit of insects; c) a suspension system which permits both the suspension of the trap as well as the safe connection of the base with the transparent cover. The insects are attracted to the trap by special substances (trophic insects attracting substances, feromones, etc.) and are eliminated by drowning into the water or by coming into contract with an insecticide coated on a paper band inside the transparent cover.

Finally, document CN 2 529 517 Y discloses to a trap for Hongzhi beetle. A paper drum-shaped casing is provided and internally provided with a trapping core. The utility model is characterized in that the external surface is coated with turpentine; the upper top and the lower bottom of the drum-shaped casing are sealed, and the profile of the drum-shaped casing is distributed with through holes has a diameter of 4 to 6 mm; and the space between the through holes is 4 centimeters to 6 centimeters. Besides, the inner wall is coated with insecticide with long effective period. When in use, the trap for Hongzhi beetle is hanged on the tree, and the profile of the drum-shaped casing is vertical to the ground; the Hongzhi beetle is attracted by the trapping core and gets into the trap, and thus is killed by the insecticide. Compared with the prior trap for Hongzhi beetle, the utility model can effectively trap the Hongzhi beetle.

### Disclosure of the invention

The aim of the invention is to provide a trapping device for frugivorous insects of the type indicated at the beginning, which being a feasible alternative to DICHLORVOS, avoids the worker preparing the trap coming into direct contact with the insecticide, either through contact or inhalation, and reduces the risks inherent in preparing the device. Another important object of the invention consists in the device being as economical as possible. This purpose is achieved by means of a trapping device for flying frugivorous insects according to claim 1. First, the contact insecticide has the advantage that it does not emit toxic vapours, which increases safety with respect to the state-of-the-art devices because the worker does not run the risk of possibly inhaling these vapours during the preparation of the trapping device.

It is also worth mentioning that sometimes the working conditions of the worker responsible for preparing or setting the devices are not optimum protection conditions against the effects of the insecticide, in other words it may be that the worker does not work with a mask or gloves. On the contrary, according to the invention, thanks to the fact that the insecticide coating is impregnated onto the walls of the inner chamber, the worker can handle of the device comfortably by its outer surface, which fully guarantees not coming into contact with the insecticide. In particular, in order to prepare the trapping device, it is only necessary to separate the lid from the base and position one or several attraction diffusers

This way, the invention proposes a step ahead in the massive trapping technique. When entering the device with its inner chamber coated with contact insecticide, the insect flies around inside the chamber looking for the exit, whereby during the flight it knocks against the walls of the chamber. In this case, as opposed to the state-of-the-art devices the insect does not die from the toxic atmosphere inside the chamber; instead, it dies because of the physical contact with the insecticide.

Another important advantage of the invention lies in its simplicity and cost. In particular, the proposed solution does not require additional support elements for the insecticide, since the trap itself acts as a support. This drastically reduces the cost because the insecticide does not need to be packaged separately, since it is integrated directly in the actual trap.

The invention further extends to a number of preferred features which are related in the dependent claims and the utility of which will be highlighted hereinafter in the detailed description of embodiments of the invention.

In order to increase even further the effectiveness of the device according to the invention, it is advisable to drive the insect actively towards the areas of the inner chamber that are coated with contact insecticide. Therefore, preferably, said chamber comprises a first area and a second area, said first area being more translucent than said second area, and said insecticide being provided on said first area. It is worth mentioning that according to the invention the first area does not have to be completely coated with insecticide to solve the technical problem in question.

The greater translucency of the first area facilitates attracting the insect towards the insecticide, due to the fact that this area receives more outside light. Once inside, the insect flies most probably towards the translucent areas and possibly coated with insecticide. Therefore the effectiveness of the trapping device is increased because by entering into contact with the insecticide the insect dies.

Moreover, the greater the luminous contrast between the first and second areas, the better the results obtained. So, preferably said first area is transparent, thereby guaranteeing that the first area filters, as little as possible, the light entering the device. This is particularly convenient, for example, on days when the sky is cloudy and therefore the sunlight is softer.

Also, in order to increase as much as possible the contrast between the first and second areas, it is preferably that said second area is opaque. This guarantees that the light entering through the second area is minimal, or virtually non-existent.

Preferably said first area is located above said second area. This avails of the fact that when insects start flying they fly upwards. As the insecticide is provided in the top of the device, the possibilities of the insect knocking against it are increased.

Furthermore, it is important that the contact insecticide is as effective as possible and that, in spite of this, the concentrations required are as are small as possible. This makes it possible to reduce to a minimum any possible damage to human health. So, preferably said contact insecticide is applicable onto the walls of said chamber in the form of an aqueous suspension. Also preferably the aqueous suspension comprises between 2 and 100 mg of contact insecticide which, particularly preferably, is a pyrethrin. Pyrethrins are very effective as insecticide agents and have low toxicity for humans. Thanks to the aqueous suspension it is guaranteed that the device, during its preparation for the trapping, does not emit toxic vapours from the solvents used in the state-of-the-art during its application onto the walls of the inner chamber. On the other hand, this solution is particularly economical because the amounts of insecticide are extremely small, without losing effectiveness.

Likewise, the invention also embraces further features of detail illustrated in the detailed description of one embodiment of the invention and in the accompanying drawings.

### Brief description of the drawings

Further advantages and characteristics of the invention are appreciated from the following description, wherein, in a non-limiting manner, they describe a preferred embodiment of the invention, with reference to the accompanying drawings, wherein:
Fig. 1, is a cut view of an embodiment of the trapping device according to the invention.
Fig. 2, is a top plan view of the inside of the lid of the device in Figure 1.

### Detailed description of an embodiment of the invention

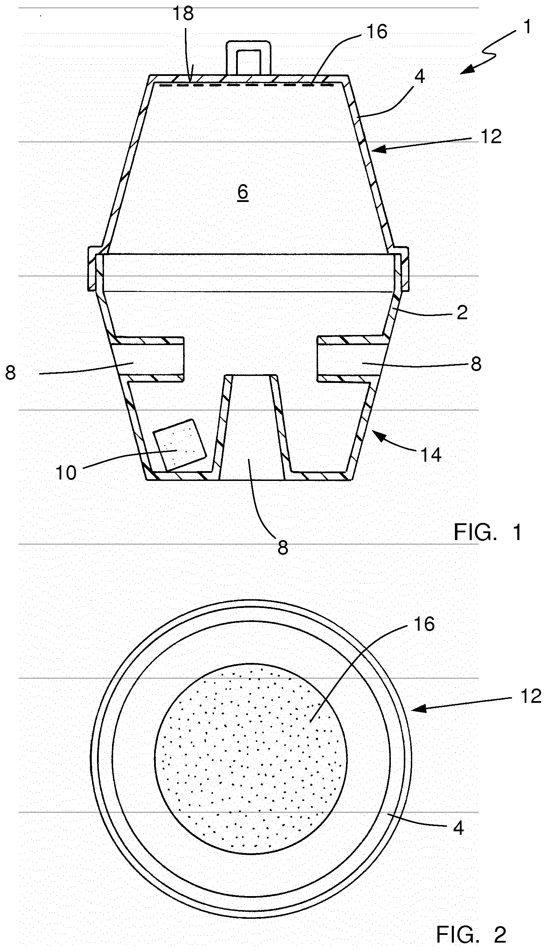

Figures 1 and 2 show an embodiment of trapping device 1 according to the invention. Device 1 is made up of a base 2 and a lid 4 removably joined together thus definining an inner chamber 6 wherein the flying insects that penetrate device 1 through openings 8 can be confined.

Chamber 6 comprises a first area 12, which in this embodiment coincides with lid 4 and a second area 14, which coincides with base 2. As can be seen in detail in Figure 2, lid 4 is a frustoconical shape. On the inner wall 18 of the top base, lid 4 is coated with a contact insecticide 16, shown by a dotted line in Figure 1 and a pointed area in Figure 2. Insecticide 16 can be applied to wall 18, for example, by adsorption or absorption.

Therefore, a method comprises a first stage of transporting a lid 4 or a base 2 of the trapping device on a conveyor belt, a second stage of applying the aqueous suspension of contact insecticide 16 to inner wall 18 of said lid 4 or said base 2 using a dosing device at a distance less than 25 mm from said wall 18, by means of a relative rotary movement between said lid 4 or said base 2 and said dosing device, and a third stage of drying said aqueous suspension in drying means such as, for example, a drying tunnel, at a temperature between 40ºC and 90ºC so that, finally, lid 4 or base 2 of the device only has adsorbed contact insecticide 16 on wall 18. The proximity of the measuring device with respect to wall 18 guarantees no splashes that could contaminate non-desired parts of inner wall 18.

Insecticide 16 in this embodiment is a pyrethrin applied by means of an aqueous suspension comprising between 2 and 25 mg of pyrethrin. For its application, the suspension with insecticide 16 is applied and distributed uniformly all over inner wall 18 and subsequently it moves on to a drying process for the water in the suspension to evaporate. This way, in the end insecticide 16 is adsorbed onto inner wall 18 of lid 4 forming a coating layer on wall 18 against which entering insects collide. Optionally, the insecticide could be adsorbed in other parts of chamber 6, such as, for example, the side walls.

It is also worth commenting that, according to the invention, first and second areas 12, 14 do not have to correspond to physical parts of device 1, in other words, first area 12 with lid 4, and second area 14 with base 2. For example, first area 12 could be just part of lid 4, while the other part of lid 4 together with base 2 could form second area 14.

In this embodiment, covering lid 4 is transparent, whereas base 2 is translucent. In an alternative embodiment, base 2 can also be opaque, so as to increase even further the contrast between the light and dark areas inside chamber 6.

To perform the trapping, the worker must also place a diffuser 10 containing insect attraction products in device 1, such as for example, a diffuser 10 which contains a solution of ammonium acetate, trimethylamine and 1,5-diaminopentane, manufactured and sold by the applicant. Optionally, the 1,5-diaminopentane, better known in the sector as cadaverine, can be replaced by another diaminoalkane, such as for example 1,4-diaminobutane, known in the sector as putrescine. At any event, the aim of diffuser 10 is to emit the attraction formulation so as to create an attractive atmosphere inside chamber 6, the vapours of which also exit outside device 1, serving as an attraction for the insects.

As an example, the embodiment of device 1 according to the invention, applied to the massive trapping of the fruit fly, known as Ceratitis Capitata, operates as follows: the worker prepares several devices 1 removing lid 4 from base 2 and placing in chamber 6, a diffuser 10 containing a solution of ammonium acetate, trimethylamine and 1,5-diaminopentane. Lid 4 shown in Figures 1 and 2 usually has a diameter whereby it is possible to hold it in your hand comfortably. In this case the smallest diameter is approximately 120 mm, so that it can be held comfortably in an adult's hand.

Thanks to the fact that insecticide 16 is in lid 4 and it exists on relatively high walls, during the preparation of device 1 the worker does not touch the insecticide, unless he does so voluntarily and in a premeditated manner. Once diffuser 10 has been positioned, the worker closes device 1 again and hangs it from the branch of a tree on the farm at a height of approximately 1.5 m off the ground. In order to obtain effective results usually a density of approximately 25 to 75 traps per hectare are provided, and preferably between 25 and 50 per hectare. The ceratitis capitata is attracted by the vapours of the attraction formulation emanating from device 1 and it ends up penetrating chamber 6 through holes 8. Due to the type and arrangement of the insecticide 16 in inner chamber 6, as well as avoiding the worker handling the insecticide directly, his exposure to toxic vapours is avoided, reducing the risk of intoxication due to handling or inhaling insecticide. Also the fact that insecticide 16 is applied from an aqueous suspension instead of from a solvent further increases the safe usage of device 1, because the worker is not exposed either to any possible vapours from solvent traces that could remain on inner wall 18 of lid 4.

Another fact that increases the effectiveness of device 1 is that first area 12 containing insecticide 16 is at the top of chamber 6, since the natural tendency of flying insects is to fly upwards. Therefore once again the possibilities of the insect colliding with insecticide 16 are increased.

## Claims

1. Trapping device for frugivorous insects comprising
[a] an insect confinement chamber (6), and
[b] at least one insect entrance opening (8) into said chamber (6), with
[c] the walls (18) delimiting said chamber (6) having, at least partially, a coating of insecticide,
**characterized in that** it comprises a base (2), and a lid (4) removably joined together to form said insect confinement chamber (6), **in that** said insecticide is a contact insecticide (16) and **in that** said contact insecticide (16) is applied onto the walls (18) of said chamber (6) in the form of an aqueous suspension.

2. Device according to claim 1, **characterized in that** said chamber (6) comprises a first area (12) and a second area (14), said first area (12) being more translucent than said second area (14), and said insecticide (16) being provided on said first area (12).

3. Device according to claim 2, **characterized in that** said first area (12) is transparent.

4. Device according to claim 2 or 3, **characterized in that** said second area (14) is opaque.

5. Device according to any of claims 2 to 4, **characterized in that** said first area (12) is located above said second area (14).

6. Device according to claim 1, **characterized in that** said aqueous suspension comprises between 2 and 100 mg of contact insecticide (16).

7. Device according to any of claims 1 to 6, **characterized in that** said contact insecticide (16) is a pyrethrin.

## Patentansprüche

1. Fangeinrichtung für fruchtfressende Insekten, die aufweist:
[a] eine Insekteneinsperrkammer (6), und
[b] zumindest eine Insekteneintrittsöffnung (8) in die Kammer (6), wobei
[c] die Wände (18), welche die Kammer (6) begrenzen, zumindest teilweise eine Beschichtung aus einem Insektizid aufweisen,
**dadurch gekennzeichnet, dass**
diese eine Basis (2) und einen Deckel (4), die lösbar miteinander verbunden sind, aufweist, um die Insekteneinsperrkammer (6) auszubilden, das Insektizid ein Kontaktinsektizid (16) ist und das Kontaktinsektizid (16) in der Form einer wässrigen Suspension auf die Wände (18) der Kammer (6) aufgebracht ist.

2. Einrichtung nach Anspruch 1, **dadurch gekennzeichnet, dass** die Kammer (6) einen ersten Bereich (12) und einen zweiten Bereich (14) aufweist, wobei der erste Bereich (12) lichtdurchlässiger ist als der zweite Bereich (14) und das Insektizid (16) im ersten Bereich (12) vorgesehen ist.

3. Einrichtung nach Anspruch 2, **dadurch gekennzeichnet, dass** der erste Bereich (12) transparent ist.

4. Einrichtung nach Anspruch 2 oder 3, **dadurch gekennzeichnet, dass** der zweite Bereich (14) undurchsichtig ist.

5. Einrichtung nach einem der Ansprüche 2 bis 4, **dadurch gekennzeichnet, dass** der erste Bereich (12) oberhalb des zweiten Bereichs (14) angeordnet ist.

6. Einrichtung nach Anspruch 1, **dadurch gekennzeichnet, dass** die wässrige Suspension zwischen 2 und 100 mg des Kontaktinsektizids (16) enthält.

7. Einrichtung nach einem der Ansprüche 1 bis 6, **dadurch gekennzeichnet, dass** das Kontaktinsektizid (16) Pyrethrin ist.

## Revendications

1. Dispositif de piégeage pour insectes frugivores comprenant :
[a] une chambre de confinement d'insectes (6), et
[b] au moins une ouverture d'entrée d'insectes (8) dans ladite chambre (6), avec
[c] les parois (18) délimitant ladite chambre (6) qui ont, au moins partiellement, un revêtement d'insecticide,
**caractérisé en ce qu'**il comprend une base (2) et un couvercle (4) assemblés, de manière amovible, ensemble afin de former ladite chambre de confinement d'insectes (6), **en ce que** ledit insecticide est un insecticide de contact (16) et **en ce que** ledit insecticide de contact (16) est appliqué sur les parois (18) de ladite chambre (6) sous la forme d'une suspension aqueuse.

2. Dispositif selon la revendication 1, **caractérisé en ce que** ladite chambre (6) comprend une première zone (12) et une seconde zone (14), ladite première zone (12) étant plus translucide que ladite seconde zone (14), et ledit insecticide (16) étant prévu sur ladite première zone (12).

3. Dispositif selon la revendication 2, **caractérisé en ce que** ladite première zone (12) est transparente.

4. Dispositif selon la revendication 2 ou 3, **caractérisé en ce que** ladite seconde zone (14) est opaque.

5. Dispositif selon l'une quelconque des revendications 2 à 4, **caractérisé en ce que** ladite première zone (12) est positionnée au-dessus de ladite seconde zone (14).

6. Dispositif selon la revendication 1, **caractérisé en ce que** ladite suspension aqueuse comprend entre 2 et 100 mg d'insecticide de contact (16) .

7. Dispositif selon l'une quelconque des revendications 1 à 6, **caractérisé en ce que** ledit insecticide de contact (16) est une pyréthrine.
